# EUROPÄISCHE PATENTANMELDUNG

(11) **EP 1 981 117 A1**
(43) Veröffentlichungstag der Anmeldung: **15.10.2008**
(21) Anmeldenummer: 07709281.5
(22) Anmeldetag: 17.01.2007
(51) Int. Cl.: H01M 14/00, H02N 11/00, B82B 1/00

(54) **VERFAHREN ZUM ERZEUGEN VON ELEKTRISCHEM STROM UND EINRICHTUNG ZUM AUSFÜHREN DES VERFAHRENS**

(30) Priorität: 20.01.2006 RU 2006101604
(71) Anmelder: Zakritoe Aktsionernoe Ob'Shchetvo 'Nauchno- Proizvodstvennoe Ob'Edinenie "Forum", Moscow, 107078 (RU)
(72) Erfinder: SINITSIN, Nikolai Ivanovich, Saratov, 410028 (RU); ELKIN, Vladimir Aleksandrovich, Saratov, 410017 (RU); KISLOV, Vladimir Vladimirovich, Moscow, 123100 (RU); BETSKY, Oleg Vladimirovich, Moskovskaya Obl.G. Fryazino, 141196 (RU); TARANOV, Igor Vladimirovich, Moscow, 105043 (RU)
(74) Vertreter: Jeck, Anton
(86) Internationale Anmeldenummer: PCT/RU2007/000015
(87) Internationale Veröffentlichungsnummer: WO 2007/084027

(57) **Zusammenfassung**

Die Erfindung betrifft ein Verfahren zur Gewinnung von elektrischer Energie und eine elektrische Energiequelle zur Durchführung des Verfahrens. Es ist vorgesehen, dass eine Wasserschicht mit der Dicke von einigen Nanometern bis Millimeterbruchteilen zwischen Schichten aus leitfähigem, gegenüber Wasser inerten Material angeordnet wird und dass die elektrische Energie von oberen leitfähigen Schichten abgeleitet wird, vorausgesetzt, dass die mit der Wasserschicht kontaktierende Oberfläche der leitfähigen Schichten nanostrukturiert ist, dann werden neben den Kontakten der nanostrukturierten leitfähigen Oberflächen mit einer dünnen Wasserschicht die Bedingungen für die Strukturierung des Wassermechanismus erzeugt und ein neues System für die Gewinnung elektrischer Energie geschaffen.

## Beschreibung

Die Erfindung betrifft ein Verfahren zur Gewinnung von elektrischer Energie und eine elektrische Energiequelle zur Durchführung des Verfahrens.

Die angemeldete Gruppe von Erfindungen umfasst ein System der Kontakte nanostrukturierter leitender Oberflächen mit einer dünnen Wasserschicht sowie den hydroelektrischen Generator auf der Basis der nanostrukturierten Werkstoffe als Energiequelle. In der angemeldeten Gruppe von Erfindungen werden die bis jetzt nicht bekannten Prinzipien des Aufbaus von Energiesystemen benutzt, welche nachfolgend auf verschiedenen Gebieten der Wissenschaft und Technik zum Einsatz kommen können. Das Wesen der Erfindung besteht darin, dass das System der Kontakte der nanostrukturierten leitfähigen Oberflächen mit einer dünnen Wasserschicht unter bestimmten Bedingungen zur Quelle der elektromotorischen Kraft (EMK) wird. Um solche Bedingungen zu schaffen, muss erstens die Wasserschicht an zwei entgegengesetzten Seiten mit Schichten aus einem leitfähigen Material umringt sein. Dabei, um eine eventuelle Änderung der chemischen Zusammensetzung des Wassers zu vermeiden, müssen die leitfähigen Schichten aus einem Material ausgebildet werden, welches gegenüber Wasser inert ist (Metalle, Metalloide, ihre Salze, Legierungen, Halbleiter). Zweitens müssen die Oberflächen der leitfähigen Schichten, welche mit der Wasserschicht in Kontakt sind, nanostrukturiert sein. Das heißt, sie müssen nanodimensionale strukturelle Inhomogenitäten in Form von Buckeln und/oder Aushöhlungen und/oder nanodimensionale und/oder parametrische Inhomogenitäten (Inhomogenitäten der Leitfähigkeit, der Dielektrizitätskonstante usw.) aufweisen. Dieses System besteht aus einer ersten leitfähigen Schicht, einer wasserhaltigen Schicht und einer zweiten leitfähigen Schicht. Zwischen den leitfähigen Schichten dieses Systems entsteht eine elektrische Potentialdifferenz. Die Entstehung der Potentialdifferenz ist durch den Strukturierungsvorgang des Wassermediums bedingt. Diese Strukturierung wird durch das inhomogene elektrische Feld angeregt. Dieses Feld existiert nahe an den nanodimensionalen Strukturinhomogenitäten und/oder Parameter-Inhomogenitäten der leitfähigen Oberflächen, welche mit den Wassermolekülen kontaktieren. Die Anzahl solcher leitfähiger Schichten kann im allgemeinen Fall beliebig (mehr als zwei) sein.

Damit werden neben den Kontakten der nanostrukturierten leitfähigen Oberflächen mit einer dünnen Wasserschicht die Bedingungen für die Strukturierung des Wassermediums erzeugt. Diese Strukturierung verursacht ihrerseits die Trennung und die Übertragung der entgegengesetzt geladenen Komponenten des Wassermediums an die gegenüberliegenden leitfähigen Oberflächen der Platten, welche die Wasserschicht umgeben.

Dieser Effekt wurde zum ersten Mal durch die Erfinder der angemeldeten Erfindung empirisch erkannt. Er kann bedingt als hydroelektrischer Effekt bezeichnet werden. Wird die elektrische Spannung an die leitfähigen Schichten des Systems angelegt, so führt der durch diese Spannung passierende Strom zur Freisetzung von elektrischer Energie.

Damit wird das System der Kontakte der nanostrukturierten leitfähigen Oberflächen mit einer dünnen Wasserschicht unter den oben genannten Bedingungen zur EMK-Quelle. Die elektrische Energie kann dieser EMK-Quelle entnommen werden. Die Dicke dieses Systems liegt im Bereich von einigen Nanometern und mehr.

Es wurde festgestellt, dass der äußerst kleine hydroelektrische Effekt sogar dann vorliegt, wenn die dünne Reinwasserschicht von den Oberflächen der leitfähigen Schichten eingefasst ist. Dabei sind diese leitfähigen Schichten praktisch inhomogenitätsfrei, zum Beispiel dank der höchst sorgfältigen Behandlung dieser Oberflächen. Die genannte Erscheinung ist dadurch bedingt, dass solche Oberflächen grundsätzlich immer sowohl strukturelle als auch parametrische Nanoinhomogenitäten aufweisen. Diese tragen zu einer schwach ausgeprägten sehr geringen Spurenstrukturierung der dünnen Wasserschicht bei.

Die Platten begrenzen die Wasserschicht. Diese Platten können nicht nur aus einem leitenden Material, sondern auch aus einem Dielektrikum oder Halbleiter gefertigt werden. Um in diesem Fall den hydroelektrischen Effekt zu erreichen, genügt es, dass die mit der wasserhaltiger Schicht kontaktierenden Oberflächen (eine oder beide) der Platten leitfähige Einschlüsse und/oder parametrische Inhomogenitäten enthalten. Die Oberflächen der genannten leitfähigen Einschlüsse kontaktieren auch mit der wasserhaltigen Schicht. Diese Oberflächen müssen ihrerseits nanodimensional sein und/oder nanodimensionale Inhomogenitäten aufweisen. Um dabei die elektrische Energie zu gewinnen, müssen die genannten leitfähigen Einschlüsse in jeder Schicht einen elektrischen Kontakt zu den jeweiligen Kontakten haben, an welche die Belastung angelegt wird.

Die erforderlichen Struktur- und/oder parametrische Inhomogenitäten wurden folgenderweise erreicht. Entweder wurde eine Sonderbehandlung der Oberfläche der mit der wasserhaltigen Schicht kontaktierenden leitfähigen Schichten vorgenommen, und/oder das entsprechende Material wurde künstlich auf die Oberfläche der leitfähigen Schichten oder der leitfähigen Einschlüsse aufgetragen. Als das auf die Oberfläche der leitfähigen Schichten aufzutragende Material können unter anderem Kohlenstoff-Nanoröhrchen, Diamantpulver usw. eingesetzt werden.

Somit weist das angemeldete Verfahren der Erzeugung von elektrischer Energie grundsätzliche Unterschiede gegenüber allen bekannten elektrochemischen, elektromechanischen, elektrokinetischen und hydrodynamischen Verfahren der elektrischen Energiegewinnung auf. Diese grundsätzlichen Unterschiede bestehen darin, dass im Laufe der Erzeugung der elektrischen Energie keine Materialabnutzung der im Betrieb befindlichen Einrichtung vorliegt. Das hängt damit zusammen, dass keine sich reibenden oder anderweitig sich berührenden Oberflächen der Bauteile und Baueinheiten vorhanden sind.

Die Erfindung wird anhand von in den Zeichnungen dargestellten Ausführungsbeispielen näher erläutert. Es zeigen:
- Fig. 1: eine Zelle, die den hydroelektrischen Effekt verwirklicht, mit einer wasserhaltigen Schicht,
- Fig.2: den Aufbau der üblichen, nichtabgeschirmten wasserhaltigen Membran und
- Fig. 3: eine abgeschirmte hydroelektrische Zelle als abgedichteter zylinderförmiger Ganzmetallbehälter.

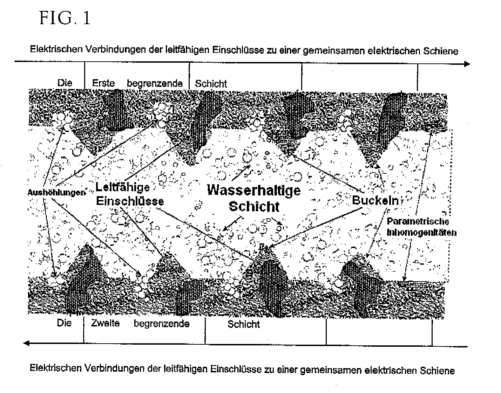

In Fig. 1 ist der allgemeine Fall des Systems gezeigt, welches ermöglicht den hydroelektrischen Effekt zu verwirklichen. Es handelt sich um eine Zelle, welche eine wasserhaltige Schicht enthält. Die wasserhaltige Schicht ist durch Platten begrenzt. Die Platten sind aus einem gegen Wasser inerten leitendem Material gefertigt. Die Oberfläche der Platten kontaktiert mit der wasserhaltigen Schicht und weist nanodimensionale Struktur- und/oder parametrische Inhomogenitäten auf. Wenn solche Platten aus einem Dielektrikum oder einem Halbleiter bestehen, müssen sie nanodimensionale leitfähige Einschlüsse enthalten. Die Einschlüsse müssen an die entsprechenden elektrischen Kontakte angeschlossen werden. Es wurden Versuche durchgeführt, welche es ermöglicht haben, den hydroelektrischen Effekt in konkreten Einrichtungen zu realisieren. Bei Durchführung solcher Versuche wurden die die wasserhaltige Schicht umringenden Platten aus solchen Materialien gefertigt, die inert gegenüber Wasser sind, nämlich Kohlenstoff, Silizium, Glaskohle, Vanadiumdioxid, Gold, Chrom und manche andere Materialien. Sie enthielten nanodimensionale Inhomogenitäten in Form von Buckeln oder Aushöhlungen oder Parameterinhomogenitäten auf der mit Wasser kontaktierenden Oberfläche. Bei den meisten durchgeführten Versuchen wurde als wasserhaltige Schicht eine Schicht von doppelt destilliertem Wasser (nachfolgend Bidestillat genannt) benutzt. Die Stärke der Schicht betrug ca. 100 µm. Die Kontaktfläche der leitfähigen Schicht mit Wasser betrug ca. 1 cm². Von der Außenbelastung solcher Zellen wurden elektrische Ströme abgewonnen, die im Bereich von einigen Nanoampere bis einige Mikroampere bei einer Spannung von ca. 10 - 300 mV.

Es wurde festgestellt, daß nanodimensionale Inhomogenitäten in Form von Buckeln oder Aushöhlungen oder Parameterinhomogenitäten auf der leitfähigen Oberflläche der mit der wasserhaltigen Schicht kontaktierenden Platten aus einem nichtleitenden wasserunlöslichen Material ausgebildet werden können. In diesem Fall liegt ebenfalls eine Strukturierung der Wasserschicht mittels dielektrischer nanodimensionaler Strukturinhomogenitäten vor. Diese Strukturierung führt auch zum hydroelektrischen Effekt. Jedoch ist die Wahrscheinlichkeit der Entstehung von inhomogenen elektrischen Feldern (welche die Strukturierung der Wasserschicht verursachen) im homogenen Wassermedium wesentlich geringer als beim Vorhandensein von leitfähigen nanodimensionalen Strukturinhomogenitäten. Infolgedessen nimmt die Größe des Effekts der elektrischen Energieerzeugung durch die wasserhaltige Schicht wesentlich ab. Beispiele für solche nichtleitende Nano- und Mikrostruktur-Inhomogenitäten, welche im Versuch eingesetzt wurden, sind wie folgt: Diamantpulver, Glasbruchpulver, Korundpulver, Korallenkalziumpulver "Alka-Main". Die Pulver wurden über die Oberfläche einer der Schichten gleichmäßig verteilt.

Es wurde versuchsweise festgestellt, dass die entdeckte Erscheinung der Erzeugung von elektrischer Energie dann vorliegt, wenn die Wasserschicht chemische und/oder mechanische Beimischungen, darunter wasserlösliche Salze enthält. Der Effekt weist keine qualitativen Änderungen bei Konzentrationen der Beimischungen bis zu 1 % auf.

Es wurde auch versuchsweise festgestellt, dass die Größen der gewonnenen EMK sowie der Innenwiderstand der Wasserschicht von zwei Faktoren abhängig sind:
1) das Material, aus welchem die mit Wasser kontaktierenden Platten gefertigt sind, sowie
2) die Natur der Inhomogenitäten, welche auf den Oberflächen der Platten vorhanden sind. Diese Größen können innerhalb von zwei bis vier Größenordnungen variieren.

Es wurde ebenfalls festgestellt, dass die Spannung (die Größe der gewonnenen EMK) und der Strom abnehmen wenn die Dicke der Wasserschicht, welche im Kontakt mit den gleichen Materialien steht, von einigen Nanometer bis 50 µm vergrößert wird.

Während der Forschungen wurde eine 100-prozentige Reproduzierbarkeit der Versuchsergebnisse bei gleich bleibenden Versuchsbedingungen beobachtet.

Die Temperaturgrenzen für das Bestehen des beschriebenen Effekts werden durch die Bedingungen des Vorhandenseins der Flüssigkeitsphase festgelegt.

Es wurden Einrichtungen für die Durchführung des Verfahrens entwickelt und geprüft. Es handelt sich dabei um eine elektrische Energiequelle. Sie besteht aus einer Reinwasserschicht, welche zwischen den Platten eingefasst ist. Die Platten sind aus leitfähigen gegenüber Wasser inerten Materialien gefertigt. Die mit der Wasserschicht kontaktierenden Oberflächen dieser Materialien enthalten nanodimensionale Inhomogenitäten. Bei der Ausgangsspannung von 7 - 15 mV bis 500 mV stellen sie einen Strom von 5 - 10 nA bis 6000 nA in der elektrischen Belastung sicher. Diese Ergebnisse wurden im Temperaturbereich von 12 - 30 °C in den Schichten von doppelt destilliertem Wasser ermittelt. Die Dicke der Schicht betrug höchstens 100 - 300 µm und die Arbeitsfläche belief sich auf 1 bis 2 cm². Während der Versuche wurden wasserunlöslichen Materialien eingesetzt, nämlich: Monosilizium, poliert; Monosilizium mit mikrorauer Oberfläche; poröses Monosilizium mit Nanoporen; Glaskohle, poliert, und Glaskohle mit Mikroinhomogenitäten; Kohienstoff-Nanoröhrchen; Vanadiumdioxid-Nanostrukturen.

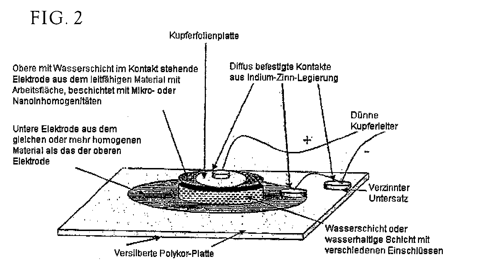

Der Aufbau der üblichen (nichtabgeschirmten) wasserhaltigen Membran ist in (Fig. 2) abgebildet. Die untere Elektrode der Membran hat einen Außenstromkreis, der mit ihr über ein Stück Kupferdraht PEV-0.05 ( 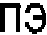 B-0.05) verbunden ist. Die Enden des Kupferdrahts sind an den verzinnten Untersätzen angelötet. Die obere Elektrode begrenzt die wasserhaltige Schicht. Diese obere Elektrode stellt eine dünne leitfähige Platte dar, welche aus einem Material mit Nanoinhomogenitäten ausgebildet ist. Die obere Elektrode ist von der unteren Elektrode durch eine Stütze aus Glasfaserfäden getrennt. Die obere Elektrode kontaktiert mit der Kupferfolienplatte. Die Kupferfolienplatte ist elektrisch (nach dem "diffusen Kompressionsverfahren") mit Kupferdrahtstück PEV-0.05 ( 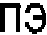 B-0.05) verbunden. Dadurch erfolgt der Anschluss an den Außenstromkreis. Auf die gleiche Weise ist die untere Elektrode auch mit dem Außenstromkreis verbunden.

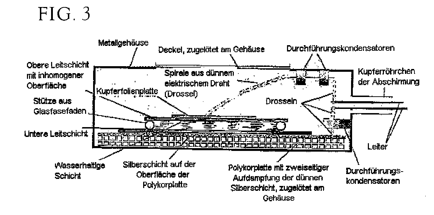

Die abgeschirmte hydroelektrische Zelle (Fig. 3) stellt einen abgedichteten zylinderförmigen Ganzmetallbehälter dar. Der Behälter ist für die Zeitdauer des Versuchs mit einem Deckel zugelötet. Der Deckel ist aus 0,3 mm dickem Messingblech ausgeführt. An die Seitenwand des Behälters ist ein Stück eines dünnen (Außendurchmesser 3,0 mm) Kupferröhrchens angelötet. Durch dieses Kupferröhrchen wurde die Zweidrahtleitung verlegt. Sie dient zum Anschluss an die Messanlage. Um die Kleinströme und Kleinspannungen - mit Größenordnungen aus dem Nano- und Mikrobereich - messen zu können, ist ein hoher Grad der Störsicherheit erforderlich. Dies bedingt den Einsatz einer abschirmenden Ganzmetallkonstruktion beim Experiment. Innerhalb des Gehäuses (Fig. 3) ist eine wasserhaltige Membran (Fig. 2) angeordnet. Sie ist an der Oberfläche der Platte aus einem harten Dielektrikum befestigt. Als Dielektrikum wurde z.B. das Material "Polykor" verwendet. Die obere und die untere Oberflächen sind metallisiert und elektrisch miteinander und dem Ganzmetallgehäuse der Zelle verbunden. Dabei ist der Kontakt der oberen Membranplatte mit der darauf liegenden Kupferfolienplatte ein galvanischer Kontakt. Die untere Oberfläche der Membranplatte ist ihrerseits an der oberen Oberfläche der metallisierten Polykor-Platte befestigt. Die Membran der wasserelektrischen Zelle ist mit dem Eingang der abgeschirmten Zweidrahtleitung über Drosseln und Durchführungskondensatoren verbunden. Die Drosseln und die Durchführungskondensatoren bilden ein Tiefpassfilter. Die untere und die obere Flachelektroden der Membran kontaktieren mit Wasser. Diese Elektroden weisen eine Parallelitätsabweichung gegeneinander von max. 0,1 - 0,3 µm alle 2 cm² auf. Der Abstand wurde mit Hilfe von Glasfaserfäden mit einem kalibrierten Durchmesser aufrechterhalten (Fig. 3).

Die Funktionsweise der abgeschirmten hydroelektrischen Zelle (Fig. 3) als Stromerzeuger ist wie folgt:

Die wasserhaltige Membran (Fig. 2) ist innerhalb des Ganzmetallgehäuses der abgeschirmten wasserelektrischen Zelle (Fig. 3) angeordnet. Diese Membran erzeugt eine elektrische Spannung. Diese Spannung wird über Drosseln und Durchführungskondensatoren zum Eingang einer Zweidrahtleitung weitergeleitet. Wird am Ausgang dieser Leitung eine Belastung angeschlossen, dann fließt durch diese Belastung elektrischer Strom.

Die Versuche haben gezeigt, dass die elektrischen Parameter der abgeschirmten hydroelektrischen Zellen im Laufe einer längeren Zeitspanne (Dutzende von Stunden) praktisch unverändert bleiben. Die Änderungen der elektrischen Parameter der Zellen fangen praktisch erst dann an, wenn eine wesentliche Wassermenge aus der wasserhaltigen Membran verdampft ist. Die Erfinder haben keine speziellen baulichen Maßnahmen zur Abdichtung der Zellen ergriffen, welche die Wasserverdampfung aus den Zellen während des Betriebs der Einrichtung verhindert hätten. Das ist keine prinzipielle Sache. Es ist gut bekannt, dass die bereits heute bestehenden Technologien es ermöglichen, ohne großen Arbeitsaufwand solche Einrichtungen herzustellen, welche die komplette Abdichtung der wasserhaltigen Schichten sicherstellen. Diese Einrichtungen sind der durch die Erfinder entwickelten Einrichtung ähnlich. Sie schließen eine Wasserverdampfung und die Wasserleckagen aus der Arbeitswasserschicht aus.

Die Funktionsweise der Zelle als Stromerzeuger ist wie folgt:

Die wasserhaltige Zelle erzeugt eine elektrische Spannung, welche über die Drosseln und die Durchführungskondensatoren zum Eingang der abgeschirmten Zweidrahtleitung übertragen wird. Wird am Ausgang dieser Leitung eine Belastung angeschlossen, so wird durch diese Belastung elektrischer Strom fließen. Einige derartige wasserhaltige Zellen können parallel oder in Reihe geschaltet werden. Im ersten Fall führt dies zur Vergrößerung des Arbeitsstroms und im zweiten Fall zur Erhöhung der Arbeitsspannung.

Für die Herstellung von Grenzelektroden der wasserhaltigen Membrane wurden folgende Materialien eingesetzt:
■ Eigenleitungs-Monosiliziumplatten mit Reinheitsgrad 999,999999 %, Oberflächenpolierklasse 14;
■ Siliziumplatten, beschichtet mit Kohlenstoff-Nanoröhrchen mit einem Durchmesser von 30 bis 250 Angström; die Kohlenstoff-Nanoröhrchen wurden in Form von Dünnfolien mit einer Stärke von 0,1 - 0,2 µm gezüchtet;
■ Nanoporen-Siliziumplatten mit gleichem Reinheitsgrad nach dem n-Typ und p-Typ;
■ Glaskohlenplatten, poliert;
■ Glaskohlenplatten mit nanodimensionalen Oberflächeninhomogenitäten;
■ Glaskohlenplatten mit Inhomogenitäten in Form von Nanospitzen, beschichtet mit der dünnen Folie aus Kohlenstoff-Nanoröhrchen;
■ Siliziumplatten, beschichtet mit der dünnen Folie aus Vanadiumdioxid-Nanostrukturen mit 100 - 120 nm hohen und 80 - 100 nm breiten Nanokörnern; die Nanokörner sind dicht aneinander auf der Unterlagenoberfläche angeordnet;
■ Chromplatten, poliert; nanoraue Chromplatten;
■ polierte und nanoraue Goldplatten; polierte und nanoraue Tantalplatten.

Für die Aufbereitung der wasserhaltigen Zellen wurden folgende Zutaten verwendet: Bidestillat; Diamantpulver Nr. 5, Nr. 14, Nr. 28; Korundpulver Nr. 10, Nr. 28, Nr. 40; Korallenkalziumpulver Alka-Main natürlicher Herkunft; künstliche Korallenkalziumpulver Alka-Main; Glasstaub (Glasbruchpulver mit Korngröße 5 - 10 µm).

Die Ergebnisse der Versuche haben gezeigt, dass die Einführung von lösbaren Beimischungen (Säuren, Alkohole, physiologische Kochsalzlösung) ins Reinwasser sogar mit höchst geringen Konzentrationen (max. 1 %), welche noch keine merkliche Erhöhung der Leitfähigkeit von Wasser (unter 10 %) und der Möglichkeit der Entstehung von Konzentrationszellen hervorrufen, die mehrfache Verstärkung des hydroelektrischen Effekts verursacht.

Es sei betont, dass zur Sicherstellung der Reinheit der Wasserschichten, der Reproduzierbarkeit der Versuchsergebnisse und zur Erhöhung der Messgenauigkeit in allen durchgeführten Versuchen völlig monolithische leitfähige Schichten verwendet werden, die aus dünnen, wasserhaltige Schicht aufweisenden Platten bestehen. Und nur solche Schichten auf den mit Wasserschicht kontaktierenden Oberflächen enthielten ihrerseits nanodimensionale Struktur- oder Parameter-Inhomogenitäten. Besonders wichtig ist, dass in diesem Fall die Notwendigkeit der verfahrenstechnisch schwer realisierbaren Vereinigung der leitfähigen Einschlüsse auf der Oberfläche der unter sich die wasserhaltige Schicht einfassenden Schichten entfällt. (Diese Einschlüsse mussten zu einer gemeinsamen elektrischen Schiene vereinigt werden). Die Nutzung der monolothischen leitfähigen Schicht löst diese Aufgabe automatisch.

### Die Ergebnisse der Experimentalforschungen der Stromquellen auf der Basis des Systems von Kontakten der nanostrukturierten leitfähigen Oberflächen mit einer dünnen Wasserschicht

Die unten angeführten Tabellen 1 - 7 enthalten die Ergebnisse der durchgeführten Versuche.

In diesen Tabellen ist S die Fläche der Platte. In der Spalte "Zeit" der Tabellen entspricht die letzte Ziffer der Beendigung der Strom- und Spannungsänderung.

**Tabelle 1**

| Arbeitsströme und -spannungen der abgeschirmten Zellen der wasserhaltigen Membranen mit Elektroden aus poliertem Monosilizium und nanoporösem Silizium. | | | | | | |
|---|---|---|---|---|---|---|
| **Nr.** | **Untere Elektrode** | **Obere Elektrode** | **Füllstoff. Schichtdicke, h,** µ**m** | **Zeit, Sek.** | **U_{Ausg}, mV** | **I_{Ausg}, nA** |
| 1 | Monosilizium, poliert, S = 18 cm². Prüfstück Nr. 7, Fragment 1. | Nanoporöses Silizium, S = 2 cm². Prüfstück Nr. 1 | Wasser | 2 | 70 | 135 |
| | | | h = 200 | 5 | 50 | 94 |
| | | | | 15 | 40 | 66 |
| | | | | 35 | 35 | 44 |
| | | | | 120 | 30 | 32 |
| | | | | 600 | 30 | 30 |
| 2 | Monosilizium, poliert, S = 18 cm². Prüfstück Nr. 7, Fragment 1. | Monosilizium poliert, S = 4 cm². Prüfstück Nr. 7, Fragment 2. | Wasser | 2 | 3 | 1 |
| | | | h=150 | 5 | 0 | 0 |
| | | | | 15 | 0 | 0 |
| | | | | 35 | 0 | 0 |
| | | | | 700 | 0 | 0 |

**Tabelle 2**

| Arbeitsströme und -spannungen der abgeschirmten Zellen der wasserhaltigen Membranen mit Elektroden aus poliertem Monosilizium, beschichtet mit dünner Folie aus Kohlenstoff-Nanoröhrchen | | | | | | |
|---|---|---|---|---|---|---|
| **Nr.** | **Untere Elektrode** | **Obere Elektrode** | **Füllstoff. Schichtdicke, h,** µ**m** | **Zeit, Sek.** | **U_{Ausg}, mV** | **I_{Ausg}, nA** |
| 3 | Monosilizium, poliert, S = 18 cm². Prüfstück Nr. 7, Fragment 1. | Silizium mit Arbeitsfläche aus Kohlenstoff-Nanoröhrchen S = 1 cm². Prüfstück Nr. 1 (1014) | Wasser | 2 | 54 | 320 |
| | | | h = 300 | 5 | 48 | 250 |
| | | | | 10 | 44 | 200 |
| | | | | 20 | 40 | 187 |
| | | | | 900 | 30 | 150 |
| | | | | 1800 | 23 | 100 |
| 4 | Monosilizium, poliert, S = 18 cm². Prüfstück Nr. 7, Fragment 1. | Silizium mit Arbeitsfläche aus Kohlenstoff-Nanoröhrchen S = 1 cm². Prüfstück Nr. 2 (10330) | Wasser | 2 | 45 | 420 |
| | | | h=300 | 5 | 40 | 380 |
| | | | | 10 | 37 | 350 |
| | | | | 20 | 33 | 337 |
| | | | | 900 | 25 | 308 |
| | | | | 1800 | 20 | 300 |
| | | | | 3600 | 20 | 300 |
| 5 | Monosilizium, poliert, S = 18 cm². Prüfstück Nr. 7, Fragment 1. | Silizium mit Arbeitsfläche aus Kohlenstoff-Nanoröhrchen S = 1 cm². Prüfstück Nr. 3 (10224). | Wasser | 2 | 60 | 310 |
| | | | h = 350 | 5 | 50 | 300 |
| | | | | 10 | 41 | 289 |
| | | | | 20 | 35 | 277 |
| | | | | 900 | 22 | 238 |
| | | | | 2700 | 20 | 250 |
| | | | | 5400 | 20 | 250 |
| 6 | Monosilizium, poliert, S = 18 cm². Prüfstück Nr. 7, Fragment 1. | Silizium mit Arbeitsfläche aus Kohlenstoff-Nanoröhrchen S = 0,5 cm². Prüfstück Nr. 4 (10125). | Wasser | 2 | 60 | 490 |
| | | | h = 300 | 5 | 47 | 430 |
| | | | | 10 | 36 | 355 |
| | | | | 20 | 25 | 300 |
| | | | | 900 | 16 | 238 |
| | | | | 2700 | 10 | 120 |
| | | | | 5400 | 10 | 120 |

**Tabelle 3**

| Arbeitsströme und -spannungen der abgeschirmten Zellen der wasserhaltigen Membranen mit Elektroden aus polierten Glaskohlen SU-2000 (CY-2000), Glaskohlen mit mikroinhomogener Oberfläche und Glaskohlen, beschichtet mit dünner Folie aus Kohlenstoff-Nanoröhrchen, aus nanoporösem Silizium und Monosilizium, beschichtet mit dünner Folie aus Vanadiumdioxid-Nanostrukturen | | | | | | |
|---|---|---|---|---|---|---|
| **Nr.** | **Untere Elektrode** | **Obere Elektrode** | **Füllstoff. Schichtdicke, h,** µ**m** | **Zeit, Sek.** | **U_{Ausg}, mV** | **I_{Ausg}, nA** |
| 7 | Glaskohle, poliert SU-2000, S = 20 cm². Prüfstück Nr. 1, Fragment 1. | Silizium EKSE (3KC3) 0,1 nanoporös, S = 2,5 cm². Prüfstück Nr. 2. | Wasser | 2 | 43 | 400 |
| | | | h = 300 | 5 | 35 | 320 |
| | | | | 10 | 30 | 300 |
| | | | | 20 | 26 | 250 |
| | | | | 900 | 20 | 160 |
| | | | | 1800 | 15 | 90 |
| | | | | 3600 | 15 | 89 |
| 8 | Glaskohle poliert, SU-2000, S = 20 cm². Prüfstück Nr. 1, Fragment 1. | Glaskohle mit Arbeitsober-flächenstruktur in Form von Mikrospitzen, beschichtet mit Nanoröhrchen-Kohlenstofffolie, S = 4 cm². Durchmesser der Nanoröhrchen 20 - 50 Å. Dicke der Kohlen- stofffolie 0,1 µm. Höhe der Nanoröhrchen 100- 200 Å. Prüfstück Nr. 3 | Wasser | 2 | 74 | 2700 |
| | | | h=150 | 5 | 65 | 1900 |
| | | | | 10 | 60 | 1800 |
| | | | | 20 | 56 | 1500 |
| | | | | 900 | 50 | 1000 |
| | | | | 1800 | 45 | 500 |
| | | | | 3600 | 40 | 500 |
| 9 | Glaskohle poliert, SU-2000, S = 20 cm². Prüfstück Nr. 1, Fragment 1. | Glaskohle c Mikroinhomogenitäten mit Größenordnung von 1 bis 5 µm. S = 5 cm². Prüfstück Nr. 2, Fragment 1. | Wasser | 2 | 124 | 1100 |
| | | | h=150 | 5 | 110 | 850 |
| | | | | 10 | 100 | 750 |
| | | | | 20 | 86 | 640 |
| | | | | 900 | 80 | 600 |
| | | | | 1800 | 75 | 400 |
| | | | | 3600 | 70 | 370 |
| 10 | Glaskohle poliert, SU-2000, S = 20 cm². Prüfstück Nr. 1, Fragment 1. | Monosilizium poliert mit Arbeitsoberfläche aus Vanadiumdioxid-Folie (Foliendicke VO₂ - 100 nm), S = 2 cm², Prüfstück Nr. 1 | Wasser | 2 | 63 | 1300 |
| | | | h=100 | 5 | 60 | 1220 |
| | | | | 10 | 55 | 1100 |
| | | | | 20 | 50 | 1000 |
| | | | | 900 | 48 | 1000 |
| | | | | 1800 | 43 | 1000 |
| | | | | 3600 | 43 | 1000 |
| 11 | Glaskohle poliert, SU-2000, S = 20 cm². Prüfstück Nr. 1, Fragment 1. | Monosilizium poliert mit Arbeitsoberfläche aus Vanadiumdioxid-Folie (Foliendicke VO₂-100 nm), S = 2 cm². Prüfstück Nr. 2 | Wasser | 2 | 77 | 1900 |
| | | | h=100 | 5 | 70 | 1700 |
| | | | | 10 | 65 | 1600 |
| | | | | 20 | 60 | 1500 |
| | | | | 900 | 52 | 1500 |
| | | | | 1800 | 52 | 1500 |

**Tabelle 4**

| Arbeitsströme und -spannungen der abgeschirmten Zellen der wasserhaltigen Membranen mit Elektroden, deren Oberflächen Mikrolnhomogenitäten aus Dielektrika aufweisen Anmerkung: Pulvernummer bedeutet die Korngröße des Pulvers in Mikrometer. | | | | | | |
|---|---|---|---|---|---|---|
| **Nr.** | **Untere Elektrode** | **Obere Elektrode** | **Füllstoff. Schichtdicke, h,** µ**m** | **Zeit, Sek.** | **U_{Ausg}, mV** | **I_{Ausg}, nA** |
| 12 | Monosilizium poliert, S = 18 cm² Prüfstück Nr. 4 Fragment 1. | Monosilizium poliert, S = 2 cm² Prüfstück Nr. 4 Fragment 2. | Wasser | 2 | 6 | 3 |
| | | | h = 300 | 5 | 5 | 3 |
| | | | | 10 | 4 | 2 |
| | | | | 20 | 2 | 2 |
| | | | | 900 | 1 | 1 |
| | | | | 1800 | 1 | 1 |
| 13 | Monosilizium poliert, S = 18 cm² Prüfstück Nr. 4 Fragment 1. Arbeitsfläche ist mit einer dünnen Pulverschicht bedeckt (Prüfstück Nr. 80) aus Korallenkalzium Alka-Main. | Monosilizium poliert, S = 2 cm² Prüfstück Nr, 4 Fragment 2. | Wasser | 2 | 11 | 10 |
| | | | h = 300 | 5 | 9 | 8 |
| | | | | 10 | 8 | 7 |
| | | | | 20 | 6 | 6 |
| | | | | 900 | 5 | 4 |
| | | | | 1800 | 5 | 4 |
| 14 | Monosilizium poliert, S = 18 cm². Prüfstück Nr. 4 Fragment 1. Arbeitsfläche ist mit einer dünnen Pulver schicht Nr. 5 aus Glasbruchpulver mit Korngröße 5 µm be- deckt. | Monosilizium poliert, S = 2 cm² Prüfstück Nr. 4 Fragment 2. | Wasser | 2 | 9 | 9 |
| | | | h = 300 | 5 | 7 | 8 |
| | | | | 10 | 6 | 7 |
| | | | | 20 | 4 | 6 |
| | | | | | | |
| | | | | 900 | 3 | 4 |
| | | | | 1800 | 3 | 4 |
| 15 | Monosilizium poliert, S = 18 cm². Prüfstück Nr. 4 Fragment 1. 4 mm³ des Diamantpulvers Nr. 5 sind als dünne Schicht auf Arbeits- oberfläche 4 cm² gleichmäßig verteilt. | Monosilizium poliert, S = 2 cm² Prüfstück Nr. 4 Fragment 2. | Wasser | 10 | 9 | 16 |
| | | | h = 300 | 20 | 8 | 12 |
| | | | | 900 | 6 | 8 |
| | | | | 1800 | 4 | 5 |
| | | | | | | |
| | | | | 3600 | 4 | 5 |
| | | | | 4800 | 4 | 5 |
| 16 | Monosilizium poliert, S = 18 cm². Prüfstück Nr. 2 Fragment 1. | Monosilizium poliert, S = 2 cm². Prüfstück Nr. 2 Fragment 2. | Wasser | 10 | 6 | 5 |
| | | | h=300 | 30 | 3 | 2 |
| | | | | 900 | 2 | 1 |
| | | | | 2700 | 1 | 1 |
| 17 | Monosilizium poliert, S = 18 cm². Prüfstück Nr. 4 Fragment 1. 1 mm³ des Diamantpulvers Nr. 28 ist auf Ar- beitsoberfläche 4 cm² mit dünner Schicht gleichmäßig verteilt. | Monosilizium poliert, S = 2 cm² Prüfstück Nr. 4 Fragment 2. | Wasser | 10 | 8 | 15 |
| | | | h=200 | 30 | 6 | 11 |
| | | | | 900 | 4 | 5 |
| | | | | 2700 | 3 | 3 |
| | | | | 4500 | 3 | 3 |
| | | | | | | |
| | | | | | | |
| 18 | Monosilizium poliert, S = 18 cm². Prüfstück Nr. 2 Fragment 1. Dünn- schicht von 2 mm³ Diamantpulver Nr. 5 ist auf der Arbeitsflä- che 4 cm² gleichmä- ßig verteilt. | Monosilizium poliert, S = 2 cm² Prüfstück Nr. 2 Fragment 2. | Wasser | 10 | 12 | 20 |
| | | | h=300 | 30 | 9 | 14 |
| | | | | 900 | 7 | 7 |
| | | | | 1800 | 4 | 6 |
| | | | | 2400 | 4 | 6 |
| | | | | 4800 | 4 | 6 |
| 19 | Monosilizium poliert, S = 18 cm². Prüfstück Nr. 4 Fragment 1. Dünnschicht von Korundpulver Nr. 10 mit Gesamtumfang 2 mm³ ist auf der Ar- beitsfläche 4 cm² gleichmäßig verteilt. | Monosilizium poliert, S = 2 cm² Prüfstück Nr. 4 Fragment 2. | Wasser | 10 | 39 | 60 |
| | | | h = 300 | 30 | 31 | 54 |
| | | | | 900 | 12 | 11 |
| | | | | 2700 | 8 | 6 |
| | | | | 5100 | 5 | 5 |
| | | | | 8100 | 4 | 5 |
| 20 | Monosilizium poliert, S = 18 cm². Prüfstück Nr. 4 Fragment 1. Dünnschicht von Korundpulver Nr. 28 mit Gesamtumfang 4 mm³ ist auf der Ar- beitsfläche 4 cm² gleichmäßig verteilt. | Monosilizium poliert, S = 2 cm² Prüfstück Nr. 4 Fragment 2. | Wasser | 10 | 48 | 20 |
| | | | h = 300 | 30 | 33 | 18 |
| | | | | 900 | 17 | 8 |
| | | | | 2700 | 12 | 5 |
| | | | | 5100 | 10 | 5 |
| | | | | 8100 | 10 | 5 |
| | | | | | | |
| 21 | Monosilizium poliert, S = 18 cm². Prüfstück Nr. 4 Fragment 1. Dünnschicht von 4 mm³ Korundpulver Nr. 40 ist auf der Arbeitsfläche 4 cm² gleichmäßig verteilt. | Monosilizium poliert, S = 2 cm² Prüfstück Nr. 4 Fragment 2. | Wasser | 10 | 50 | 35 |
| | | | h = 300 | 30 | 35 | 32 |
| | | | | 900 | 19 | 18 |
| | | | | 2700 | 13 | 20 |
| | | | | 5700 | 12 | 20 |
| | | | | | | |
| 22 | Monosilizium poliert, S = 18 cm². Prüfstück Nr. 8, Fragment 1. | Monosilizium poliert, S = 2 cm² Prüfstück Nr. 8, Fragment 2. | Wasser | 10 | 6 | 9 |
| | | | h = 300 | 30 | 4 | 8 |
| | | | | 900 | 3 | 3 |
| | | | | 2700 | 2 | 2 |
| | | | | 5700 | 1 | 1 |

### Anmerkung zur Tabelle 4

Nach der Entfernung der dünnen Pulverschicht des harten wasserunlöslichen Dielektrikums von der unteren Elektrode (die obere und die untere Elektroden sind aus demselben Werkstück des polierten Siliziums ausgeführt) und bei der Erhaltung der Versuchsbedingungen werden der Strom und die Spannung, welche durch die Wassermembran in der Belastung entwickelt werden, fast gleich Null (I_{Ausg} ≈ 1 nA U_{Ausg} ≈ 1 mV).

**Tabelle 5**

| Abhängigkeit des Innenwiderstandes, der Arbeitsströme und -spannungen der abgeschirmten wasserhaltigen Schichten der Membran vom Material der Schichten, welche die Membran begrenzen. **Anmerkung**: Der Innenwiderstand R_{n.Innen} [kOhm · cm²] ist auf die Wasserschichtdicke 100 µm für einen stabilen Zustand reduziert. | | | | | | |
|---|---|---|---|---|---|---|
| **Nr.** | **Untere Elektrode** | **Obere Elektrode** | **Füllstoff. Schichtdicke, h,** µ**m** | **Zeit, Sek.** | **U_{Ausg}, mV** | **I_{Ausg}, nA** |
| 23 | Tantal, poliert, S = 20 cm². Prüfstück Nr. 1, Fragment 1. | Monosilizium poliert, S = 2,5 cm². Prüfstück Nr. 5, Fragment 1. Innenwiderstand der Wasser- membran Rᵢₙₙₑₙ = 250 kOhm | Wasser h = 150 Um gebungstemperatur t = 15°C. R^{r}ᵢₙₙₑₙ = 416 kOhm·cm² | 10 | 142 | 700 |
| | | | | 30 | 122 | 430 |
| | | | | 900 | 97 | 370 |
| | | | | 2700 | 72 | 150 |
| | | | | 5700 | 70 | 130 |
| | | | | | | |
| 24 | Chromplatte 999,9, poliert, S = 18 cm². Prüfstück Nr. 1, Fragment 1. | Chromplatte 999,9 po- liert, S = 3 cm². Prüfstück Nr. 1, Fragment 2. Innenwiderstand der Wasser- membran Rᵢₙₙₑₙ = 2,1 MOhm | Wasser h=100 Umgebungstemperatur t = 15°C. R^{r}ᵢₙₙₑₙ = 6300 kOhm·cm² | 10 | 92 | 205 |
| | | | | 30 | 85 | 150 |
| | | | | 900 | 77 | 60 |
| | | | | 2700 | 78 | 60 |
| | | | | 5700 | 74 | 60 |
| | | | | | | |
| 25 | Chromplatte, po- liert, S = 18 cm². Prüfstück Nr. 1, Fragment 1. | Chromplatte 999,9, rauh, mit Korngröße von 3-5 µm, S = 3 cm². Prüfstück Nr. 2. Innenwiderstand der Was- sermembran Rᵢₙₙₑₙ = 1,9 MOhm | Wasser h=100 Umgebungstemperatur t = 15°C. R^{r}ᵢₙₙₑₙ = 5700 kOhm·cm² | 10 | 100 | 350 |
| | | | | 30 | 105 | 300 |
| | | | | 900 | 110 | 180 |
| | | | | 2700 | 98 | 100 |
| | | | | 5700 | 94 | 70 |
| | | | | | | |
| 26 | Goldplatte 99,9999, poliert, S = 12 cm². Prüf- stück Nr. 1. | Goldplatte 99,9999 rauh, mit Korngröße von 5-7 µm, S = 3 cm². Prüfstück Nr. 2. Innenwiderstand der Wassermembran Rᵢₙₙₑₙ = 2,4 kOhm | Wasser h=150 Umgebungstemperatur t = 15°C. R^{r}ᵢₙₙₑₙ = 4,8 kOhm·cm² | 10 | 64 | 400 |
| | | | | 30 | 56 | 300 |
| | | | | 900 | 52 | 200 |
| | | | | 2700 | 48 | 150 |
| | | | | 5700 | 44 | 150 |
| | | | | | | |

**Tabelle 6**

| Abhängigkeit des Innenwiderstands, der Ströme und der Spannungen der abgeschirmten Wassermembran von der Zeit und vom Material der Elektroden bei gleicher Stufe der Inhomogenitäten der Oberfläche der unteren und der oberen Elektrode. **Anmerkung:** Innenwiderstand Rᵢₙₙₑₙ [kOhm] für die Wasserschichtdicke 200 µm im stabilen Zustand. | | | | | | |
|---|---|---|---|---|---|---|
| **Nr.** | **Untere Elektrode** | **Obere Elektrode** | **Füllstoff. Schichtdicke, h,** µ**m** | **Zeit, Sek.** | **U_{Ausg}, mV** | **I_{Ausg}, nA** |
| 27 | Monosilizium po- liert, mit Arbeitsoberfläche aus Vanadiumdioxid-Folie (Foliendicke VO₂ 100 nm), S = 1 cm². Prüfstück Nr. 1, Fragment 1. | Monosilizium poliert, mit Arbeitsoberfläche aus Vanadiumdioxid-Folie (Foliendicke VO₂ 100 nm), S = 1 cm²_{.} Prüfstück Nr. 1, Fragment 2. | Wasser h = 200 Umgebungstemperatur t = 18°C. Innenwiderstand Rᵢₙₙₑₙ = 55 kOhm. | 10 | 300 | 4000 |
| | | | | 30 | 220 | 3100 |
| | | | | 900 | 154 | 1200 |
| | | | | 2700 | 93 | 970 |
| | | | | 5700 | 37 | 300 |
| | | | | 6600 | 37 | 280 |
| | | | | | | |
| 28 | Monosilizium po- liert, mit Arbeitsoberfläche aus Vanadiumdioxid-Folie (Foliendicke VO₂ 100 nm), S = 1 cm². Prüfstück Nr. 2, Fragment 1. | Monosilizium poliert, mit Arbeitsoberfläche aus Vanadiumdioxid-Folie (Foliendicke VO₂ 100 nm), S = 1 cm². Prüfstück Nr. 2, Fragment 2. | Wasser h = 200 Umgebungs- temperatur t = 18°C. Innenwiderstand Rᵢₙₙₑₙ = 65 kOhm. | 10 | 260 | 3500 |
| | | | | 30 | 200 | 2400 |
| | | | | 900 | 112 | 1000 |
| | | | | 2700 | 63 | 820 |
| | | | | 5700 | 30 | 250 |
| | | | | 6600 | 29 | 235 |
| | | | | | | |
| 29 | Glaskohle poliert, SU-2000, S = 20 cm². Prüfstück Nr. 1, Fragment 1. | Glaskohle mit Mikroinhomogenitäten mit Größenordnung 1 - 5 µm. S = 2,5 cm². Prüfstück Nr. 2, Fragment 2. | Wasser h = 200 Umgebungstemperatur t = 18°C. Innenwiderstand Rᵢₙₙₑₙ = 125 kOhm | 10 | 480 | 2700 |
| | | | | 30 | 310 | 2050 |
| | | | | 900 | 200 | 1550 |
| | | | | 2700 | 180 | 1340 |
| | | | | 5700 | 160 | 1000 |
| | | | | 6600 | 157 | 990 |
| | | | | | | |
| 30 | Glaskohle mit Mikroinhomogenitäten mit Größen ordnung 1 - 5 µm. S = 5 cm². Prüfstück Nr. 2, Fragment 1. | Glaskohle mit Mikroinhomogenitäten mit Grö- ßenordnung 1 - 5 µm. S = 1 cm². Prüfstück Nr. 2, Fragment2. | Wasser h = 200 Umgebungstemperatur t = 18°C. Innenwiderstand Rᵢₙₙₑₙ = 30 kOhm | 10 | 560 | 17000 |
| | | | | 30 | 500 | 15000 |
| | | | | 900 | 460 | 12050 |
| | | | | 2700 | 400 | 9040 |
| | | | | 5700 | 350 | 6000 |
| | | | | 6600 | 350 | 6000 |
| | | | | | | |
| | | | | | | |

**Tabelle 7**

| Abhängigkeit des Innenwiderstands, der Ströme und der Spannungen der abgeschirmten Wassermembran von der Zeit. **Anmerkung:** Innenwiderstand R_{r.innen} [kOhm•cm²] ist auf die Wasserschichtdicke 300 µm und die Fläche 1 cm² reduziert. | | | | | | | |
|---|---|---|---|---|---|---|---|
| **Nr.** | **Untere Elektrode** | **Obere Elektrode** | **Füllstoff. Schichtdicke, h,** µ**m** | **R_{r.innen} [kOhm •cm²]** | **Zeit, Sek.** | **U_{Ausg}, mV** | **I_{Ausg}, nA** |
| 31 | Monosilizium poliert, S = 18 cm². Prüfstück Nr. 7, Fragment 1. | Monosilizium poliert, S = 4 cm². Prüfstück Nr. 7, Fragment 2. | Wasser | 2200 | 10 | 3 | 1 |
| | | | h = 300 | 3000 | 20 | 1 | 0 |
| | | | | 3500 | 900 | 0 | 0 |
| | | | | 4300 | 1800 | 0 | 0 |
| | | | | 5100 | 3600 | 0 | 0 |
| 32 | Monosilizium poliert, S = 18 cm². Prüfstück Nr. 7, Fragment 1. | Nanoporöses Silizium, S = 2 cm². Prüfstück Nr. 1. | Wasser | 400 | 2 | 70 | 195 |
| | | | h = 300 | 520 | 5 | 50 | 134 |
| | | | | 647 | 10 | 40 | 106 |
| | | | | 788 | 20 | 35 | 84 |
| | | | | 1686 | 900 | 30 | 62 |
| | | | | 1800 | 1800 | 30 | 61 |
| 33 | Monosilizium poliert, S = 18 cm². Prüfstück Nr. 7, Fragment 1. | Silizium mit Arbeitsfläche aus Kohlenstoff-Nanoröhrchen S = 1 cm². Prüfstück Nr. 1 (1014). | Wasser | 100 | 2 | 54 | 320 |
| | | | h = 300 | 145 | 5 | 48 | 250 |
| | | | | 187 | 10 | 44 | 200 |
| | | | | 237 | 20 | 40 | 187 |
| | | | | 289 | 900 | 30 | 150 |
| | | | | 300 | 1800 | 23 | 100 |
| | | | | 300 | 3600 | 23 | 25 |
| 34 | Monosilizium po liert, S = 18 cm². Prüfstück Nr. 7, Fragment 1. | Silizium mit Arbeitsfläche aus Kohlenstoff-Nanoröhrchen S = 0,5 cm². Prüfstück Nr. 4 (10125). | Wasser | 100 | 2 | 60 | 490 |
| | | | h = 300 | 140 | 5 | 47 | 430 |
| | | | | 180 | 10 | 36 | 355 |
| | | | | 200 | 20 | 25 | 300 |
| | | | | 250 | 900 | 16 | 238 |
| | | | | 250 | 2700 | 10 | 120 |
| | | | | 250 | 5400 | 10 | 120 |
| 35 | Glaskohle poliert, SU-2000, S = 20 cm². Prüfstück Nr. 1, Fragment 1. | Silizium EKSE (3KC3) 0,1 nanoporös, S = 2,5 cm² Prüfstück Nr. 4. | Wasser | 100 | 2 | 43 | 400 |
| | | | h = 300 | 123 | 5 | 35 | 320 |
| | | | | 149 | 10 | 30 | 300 |
| | | | | 210 | 20 | 26 | 250 |
| | | | | 218 | 900 | 20 | 160 |
| | | | | 246 | 1800 | 15 | 90 |
| | | | | 250 | 3600 | 15 | 89 |
| 36 | Glaskohle poliert, SU-2000, S = 20 cm². Prüfstück Nr. 1, Fragment 1. | Monosilizium poliert, mit Arbeitsoberfläche aus Vanadiumdioxid-Folie (Foliendicke VO₂ - 100 nm), S = 2 cm². Prüfstück Nr. 1 | Wasser | 10 | 2 | 63 | 1500 |
| | | | h = 300 | 12 | 5 | 60 | 1220 |
| | | | | 15 | 10 | 55 | 1100 |
| | | | | 22 | 20 | 50 | 1000 |
| | | | | 38 | 900 | 48 | 1000 |
| | | | | 49 | 1800 | 43 | 1000 |
| | | | | 50 | 3600 | 43 | 1000 |
| 37 | Glaskohle poliert, SU-2000, S = 20 cm² Prüfstück Nr. 1, Fragment 1. | Glaskohle mit Arbeitsoberflächenstruktur in Form von Mikrospit- zen, beschichtet mit Nanoröhrchen-Kohlenstofffolie, S = 4 cm². Durchmesser der Nanoröhrchen 20 - 50 Å. Dicke der Kohlenstofffolie 0,1 µm. Höhe der Nano- röhrchen 100-200 Å. Prüfstück Nr. 3. | Wasser | 3 | 2 | 74 | 2700 |
| | | | h = 300 | 9 | 5 | 65 | 1900 |
| | | | | 42 | 10 | 60 | 1800 |
| | | | | 75 | 20 | 56 | 1500 |
| | | | | 81 | 900 | 50 | 1000 |
| | | | | 87 | 1800 | 45 | 500 |
| | | | | 90 | 3600 | 40 | 500 |
| | | | | | | | |
| | | | | | | | |
| 38 | Glaskohle poliert, SU-2000, S = 20 cm². Prüf- stück Nr. 1, Fragment 1. | Glaskohle mit Mikroinhomogenitäten mit Größenordnung 1 - 5 µm. S = 4 cm². Prüfstück Nr. 2, Fragment -1. | Wasser | 3 | 2 | 124 | 1100 |
| | | | h = 300 | 12 | 5 | 110 | 850 |
| | | | | 56 | 10 | 100 | 750 |
| | | | | 72 | 20 | 86 | 640 |
| | | | | 108 | 900 | 80 | 600 |
| | | | | 117 | 1800 | 75 | 400 |
| | | | | 120 | 3600 | 70 | 370 |

## Patentansprüche

1. Verfahren zur Gewinnung von elektrischer Energie,
**dadurch gekennzeichnet,**
**dass** eine Wasserschicht mit der Dicke von einigen Nanometern bis Millimeterbruchteilen zwischen Schichten aus leitfähigem, gegenüber Wasser inerten Material angeordnet wird und
**dass** die elektrische Energie von diesen leitfähigen Schichten abgeleitet wird, vorausgesetzt,
**dass** die mit der Wasserschicht kontaktierende Oberfläche der leitfähigen Schichten nanostrukturiert ist.

2. Verfahren nach Anspruch 1,
**dadurch gekennzeichnet,**
**dass** die mit der Wasserschicht kontaktierende Oberfläche der leitenden Schichten nanodimensionale strukturelle Inhomogenitäten in Form von Buckeln und/oder Aushöhlungen und/oder nanodimensionale und/oder parametrische Inhomogenitäten aufweist.

3. Verfahren nach Anspruch 1 und 2,
**dadurch gekennzeichnet,**
**dass** mindestens eine der Schichten aus einem Dielektrikum mit leitfähigen Einschlüssen ausgebildet ist, wobei die Einschlüsse zu einer elektrischen Schiene vereinigt sind.

4. Verfahren nach Anspruch 1,
**dadurch gekennzeichnet,**
**dass** das Wasser chemische und/oder mechanische Beimengungen mit einer Konzentration von maximal 1 % enthält.

5. Elektrische Energiequelle aus einer isolierten Zelle,
**dadurch gekennzeichnet,**
**dass** die Zelle mindestens zwei leitfähige Schichten aus einem gegenüber Wasser inerten Material aufweist, an die die Außenbelastung angeschlossen ist und
**dass** zwischen diesen leitenden Schichten eine Wasserschicht mit der Dicke von einigen Millimeterbruchteilen bis einem Nanometer angeordnet ist, wobei die mit der Wasserschicht kontaktierenden Oberflächen nanostrukturiert sind.

6. Elektrische Energiequelle nach Anspruch 5,
**dadurch gekennzeichnet,**
**dass** die Oberfläche der mit der Wasserschicht kontaktierenden leitenden Schichten nanodimensionale strukturelle Inhomogenitäten in Form von Buckeln und/oder Aushöhlungen und/oder nanodimensionale und/oder parametrische Inhomogenitäten aufweist.

7. Elektrische Energiequelle nach Anspruch 5 und 6,
**dadurch gekennzeichnet,**
**dass** mindestens eine der leitfähigen Schichten aus Dielektrikum mit leitfähigen Einschlüssen besteht und
**dass** die Einschlüsse zu einer elektrischen Schiene vereinigt sind und zwar mit der Möglichkeit zum Anschluss einer Außenbelastung.

8. Elektrische Energiequelle nach Anspruch 5 oder 6,
**dadurch gekennzeichnet,**
**dass** mindestens zwei isolierte Zellen serienweise in einem Stromkreis geschaltet sind.

9. Elektrische Energiequelle nach Anspruch 5 oder 6,
**dadurch gekennzeichnet,**
**dass** mindestens zwei isolierte Zellen in einem Stromkreis parallel geschaltet sind.

10. Elektrische Energiequelle nach einem der Ansprüche 5 bis 8,
**dadurch gekennzeichnet,**
**dass** das Wasser zusätzlich chemische und/oder mechanische Beimengungen mit Konzentrationen von maximal 1 % enthält.

11. Elektrische Energiequelle nach Anspruch 5,
**dadurch gekennzeichnet,**
**dass** sie mindestens drei leitfähige Schichten aus einem wasserlöslichen Material aufweist und
**dass** zwischen den leitfähigen Schichten mindestens zwei Wasserschichten angeordnet sind.
